# EUROPÄISCHE PATENTANMELDUNG

(11) **EP 0 841 215 A2**
(43) Veröffentlichungstag der Anmeldung: **13.05.1998**
(21) Anmeldenummer: 97116343.1
(22) Anmeldetag: 19.09.1997
(51) Int. Cl.: B60Q 1/52

(54) **Einrichtung zum Anbau im Heckbereich von Fahrzeugen mit einer Abstandsmess- bzw. -warnvorrichtung**

(30) Priorität: 09.11.1996 DE 19646375
(71) Anmelder: ITT MANUFACTURING ENTERPRISES, INC., Wilmington, Delaware 19801 (US)
(72) Erfinder: Feger, Rolf, 74321 Bietigheim-Bissingen (DE); Mergel, Harry, 71720 Oberstenfeld (DE)
(74) Vertreter: Jahn, Wolf-Diethart

(57) **Zusammenfassung**

Die Erfindung bezieht sich auf eine Einrichtung zum Anbau im Heckbereich von Fahrzeugen mit einer Abstandsmeß- bzw. -warnvorrichtung, die insbesondere als Einparkhilfe vorgesehen ist, wobei eine von einem Sensor oder einer Sende- und Empfangseinrichtung gebildete Sensorik innerhalb der Einrichtung untergebracht ist. Um die Installation einer Abstandsmeß- bzw. -warnvorrichtung in ein Fahrzeug zu vereinfachen, ist erfindungsgemäß vorgesehen, daß alle zu der Abstandsmeß- bzw. -warnvorrichtung gehörenden Elemente bzw. Bauteile in der zum Anbau im Heckbereich des Fahrzeuges bestimmten Einrichtung integriert sind und innerhalb dieser Einrichtung komplett verdrahtet sind.

## Beschreibung

Die Erfindung bezieht sich auf eine zum Anbau im Heckbereich von Fahrzeugen bestimmte Einrichtung mit einer Abstandsmeß- bzw. -warnvorrichtung mit den Merkmalen des Oberbegriffs des Anspruchs 1.

Derartige Einrichtungen sind beispielsweise aus der DE 32 44 358 A1 oder aus der DE 86 26 970 U1 bekannt. Bei der DE 32 44 358 A1 sind in einer im Heckbereich angebauten Einrichtung, die vorzugsweise eine Heckleuchte ist, eine Anzahl von Sendeelementen bzw. Empfangselementen mit fächerförmig überlappenden Abstrahl- bzw. Empfängerwinkeln angeordnet. Aus der DE 86 26 907 U1 ist bekannt, daß wenigstens ein Sender und/oder ein Empfänger einer Abstandsmeßvorrichtung in wenigstens einer Rückleuchte eines Kraftfahrzeuges eingebaut ist.

In beiden Fällen besteht jedoch der Nachteil, daß die zu der Abstandsmeß- bzw. -warnvorrichtung gehörenden Elemente, wie die Sensorik, die Auswerteelektronik und mindestens ein entsprechender Informationsgeber, örtlich getrennt im Fahrzeug untergebracht sind. Somit ist ein unnötig großer Aufwand für die Verdrahtung dieser einzelnen Elemente erforderlich, wobei außerdem ein relativ großer Abstand zwischen diesen einzelnen Elementen zu überwinden ist.

Die Aufgabe der Erfindung besteht daher darin, den Aufwand für die Installation einer, insbesondere als Einparkhilfe vorgesehenen, Abstandsmeß- bzw. -warnvorrichtung in einem Fahrzeug zu verringern.

Erfindungsgemäß wird die Aufgabe durch eine Einrichtung mit den Merkmalen des Anspruchs 1 gelöst. Wesentlich an der Erfindung ist, daß nunmehr alle für die Abstandsmeß- bzw. -warnvorrichtung erforderlichen Elemente in einer einzigen Einrichtung integriert sind, die zum Anbau im Heckbereich eines Fahrzeuges bestimmt ist. Durch die örtliche Zusammenfassung aller zur Abstandsmeß- bzw. -warnvorrichtung gehörenden Elemente einschließlich einer kompletten Verdrahtung dieser Elemente untereinander innerhalb der im Heckbereich des Fahrzeuges einzubauenden Einrichtung vereinfacht wesentlich die Installation der Abstandsmeß- bzw. -warnvorrichtung im Fahrzeug. Es ist lediglich erforderlich, eine Stromversorgung zu der im Heckbereich anzubauenden Einrichtung herzustellen, welche, beispielsweise in Abhängigkeit von einer beabsichtigten Rückwärtsfahrt, aktivierbar ist. Vorteilhaft wäre hier die Stromversorgung der in die Einrichtung integrierten kompletten Abstandsmeß- bzw. -warnvorrichtung durch eine im Fahrzeug ohnehin vorhandene Einrichtung, beispielsweise durch das Einlegen des Rückwärtsganges oder das Einschalten des Rückfahrlichtes, zu aktivieren. Außerdem wird der Aufwand für die Installation einer Abstandsmeß- bzw. -warnvorrichtung am Fahrzeug auch dadurch verringert, daß die komplette Abstandsmeß- bzw. -warnvorrichtung komplett in einer ohnehin zum Anbau im Heckbereich des Fahrzeuges bestimmten Einrichtung vormontiert ist. Dadurch entfallen gesonderte Montagevorgänge der einzelnen Elemente der Abstandsmeß- bzw. -warnvorrichtung an verschiedenen Orten des Fahrzeuges.

Vorteilhafte Ausgestaltungen der Erfindung sind den Unteransprüchen entnehmbar.

Vorteilhaft ist eine Ausgestaltung gemäß Anspruch 2, wonach die zum Anbau im Heckbereich des Fahrzeuges bestimmte Einrichtung, in welche die komplette Abstandsmeß- bzw. -warnvorrichtung integriert ist, eine Heckblende für das Fahrzeug ist. In diesem Fall besteht die Möglichkeit, die einzelnen Elemente der Abstandsmeß- bzw. -warnvorrichtung in entsprechenden Hohlräumen oder Kammern der Heckblende unterzubringen und komplett miteinander zu verdrahten. Somit ist es lediglich erforderlich, eine Stromversorgung zur Heckblende herzustellen, in welche eine Schaltvorrichtung zur Aktivierung der Abstandsmeß- bzw. -warneinrichtung eingeschlossen ist. Hierzu wird eine Ausgestaltung gemäß Anspruch 3 empfohlen, welche vorsieht, daß die in die Heckblende integrierte Abstandsmeß- bzw. -warnvorrichtung elektrisch an eine benachbarte Mehrfunktionsheckleuchte oder an eine vorhandene separate Rückfahrleuchte angeschlossen ist. Wenn dabei der Anschluß an die Rückfahrleuchte erfolgt, ist gewährleistet, daß die Abstandsmeß- bzw. -warnvorrichtung nur dann aktiviert ist, wenn die Rückfahrleuchte aktiviert ist, d.h. wenn die Rückwärtsfahrt zumindest beabsichtigt ist. Der Aufwand für einen derartigen Anschluß ist äußerst gering

Eine andere vorteilhafte Ausgestaltung gemäß Anspruch 4 sieht vor, daß die komplette Abstandsmeß- bzw. -warnvorrichtung in eine separate Rückfahrleuchte integriert ist, welche zum Anbau im Heckbereich eines Fahrzeuges bestimmt ist. Diese Ausgestaltung ist insbesondere dann von Vorteil, wenn eine Nachrüstung erfolgen soll.

Bevorzugt wird jedoch eine vorteilhafte Ausgestaltung der Erfindung gemäß Anspruch 5, welche vorsieht, daß die zum Anbau im Heckbereich eines Fahrzeuges bestimmte Einrichtung, in welche die Abstandsmeß- bzw. -warnvorrichtung integriert ist, eine multifunktionale Heckleuchte für ein Fahrzeug ist. Vorzugsweise ist diese Heckleuchte eine multifunktionale Heckleuchte. In diesem Fall sind in der Einrichtung Heckleuchte neben den üblichen Funktionen einer Heckleuchte die Elemente aktiver oder passiver Wandler (Sensor), Sender-Empfänger-Auswerteelektronik und ein Lautsprecher als akustische Signaleinrichtung integriert, welche außerdem innerhalb der Heckleuchte komplett verdrahtet sind. Diese Ausgestaltung ist besonders kostengünstig als serienmäßige Heckleuchte oder als Heckleuchte für Nachrüstzwecke. Eine zusätzliche Verdrahtung wegen der in die Heckleuchte integrierten Abstandsmeß- bzw. -warneinrichtung ist nicht erforderlich, da die Schnittstelle, d.h. der Kontaktstecker zum Fahrzeug unverändert bleibt. Die Abstandsmeß- bzw. -warneinrichtung kann zusätzlich zu der Glühlampe für das Rückfahrlicht an den Anschluß für das Rückfahrlicht angeschlossen werden, so daß die Abstandsmeß- bzw. -warneinrichtung über den Rückfahrlichtschalter gemeinsam mit dem Rückfahrlicht aktiviert wird. Das bedeutet, daß die normale, im Fahrzeug vorhandene Verdrahtung ausreicht, um eine in die Heckleuchte integrierte Abstandsmeß- bzw. -warnvorrichtung an die Fahrzeugelektrik anzuschließen.

Nachfolgend wird ein Ausführungsbeispiel der Erfindung näher beschrieben. Auf eine Zeichnung wird verzichtet, weil dem Fachmann die Beschreibung des Ausführungsbeispieles auch ohne Zeichnung klar verständlich sein dürfte.

Im Ausführungsbeispiel ist die zum Anbau im Heckbereich von Fahrzeugen bestimmte Einrichtung eine Mehrfunktions- bzw. Mehrkammerheckleuchte. Die Heckleuchte weist ein Gehäuse mit mehreren Kammern auf, welches durch eine transparent eingefärbte Abdeckscheibe nach außen hin abgedeckt ist. In den Leuchtenkammern sind Glühlampen untergebracht, welchen bestimmte Signalfunktionen zugeordnet sind. Die Abdeckscheibe ist in den Abschnitten der einzelnen Kammern so eingefärbt, daß Licht in der vorgeschriebenen Signalfarbe wird. Die Signalfunktionen der Mehrfunktionsheckleuchte sind dabei das Rücklicht, das Bremslicht, das Blinklicht, das Rückfahrlicht und ggf. das Nebelschlußlicht. Die Glühlampen der Mehrfunktionsheckleuchte sind elektrisch mit entsprechenden Steckkontakten verbunden, an welche über einen entsprechenden Stecker die einzelnen, vorzugsweise zu einem Kabelbaum verbundenen, Leitungen anschließbar sind.

Innerhalb der Heckleuchte sind, vorzugsweise in einer separaten Kammer der Heckleuchte, die für eine Abstandsmeß- bzw. -warneinrichtung erforderlichen Elemente bzw. Bauteile untergebracht. Insbesondere sind das der aktive oder passive Wandler (Sensor), die Sender-Empfänger-Auswerteelektronik und ein Lautsprecher als akustische Signalvorrichtung. Diese Elemente bzw. Bauteile sind komplett miteinander verdrahtet. Der Anschluß der Abstandsmeß- bzw. -warnvorrichtung ist dabei zusätzlich auf den Steckanschluß für das Rückfahrlicht gelegt. Damit wird die in die Heckleuchte integrierte Abstandsmeß- bzw. -warnvorrichtung gemeinsam mit dem Rückfahrlicht über den Rückfahrlichtschalter aktiviert.

Bei beabsichtigter Rückwärtsfahrt, d.h. beim Einlegen des Rückwärtsganges wird der Schalter des Rückfahrlichtes betätigt, wodurch neben dem Rückfahrlicht gleichzeitig die in die Heckleuchte integrierte Abstandsmeß- bzw. -warnvorrichtung aktiviert. Je nach Art und Auslegung der Abstandsmeß- bzw. -warnvorrichtung gibt der Lautsprecher akustische Signale ab, die das Vorhandensein eines Hindernisses und dabei außerdem den Abstand des Fahrzeuges zum Hindernis akustisch anzeigen. In bekannter Weise kann das durch Piepgeräusche erfolgen, deren Frequenz mit geringer werdendem Abstand des Fahrzeuges zum Hindernis immer größer wird und bei gefährlicher Annährung beispielsweise in einen Dauerton übergeht. Die Nennung dieser Möglichkeit zur akustischen Signalgebung ist dabei nur als eine Möglichkeit gedacht. Aus dem Ausführungsbeispiel ist erkennbar, daß die in die Heckleuchte integrierte Abstandsmeß- bzw. -warnvorrichtung als Einparkhilfe für das Fahrzeug bestimmt ist.

## Patentansprüche

1. Einrichtung zum Anbau im Heckbereich von Fahrzeugen mit einer Abstandsmeß- bzw. -warnvorrichtung, die insbesondere als Einparkhilfe vorgesehen ist, wobei eine von einem einfachen Sensor oder einer Sende- und Empfangseinrichtung gebildete Sensorik innerhalb der Einrichtung untergebracht ist, dadurch **gekennzeichnet**, daß ein erforderlicher aktiver oder passiver Wandler (Sensor), eine erforderliche Sender-Empfänger-Auswerteelektronik und eine Abstandssignal- bzw. -warneinrichtung, vorzugsweise in Form eines Lautsprechers, in der Einrichtung integriert sind und daß diese gemeinsam die Abstandsmeß- bzw. Warnvorrichtung bildenden Elemente innerhalb der Einrichtung komplett verdrahtet sind.

2. Einrichtung nach Anspruch 1**,** dadurch **gekennzeichnet**, daß die Einrichtung eine Heckblende für ein Fahrzeug ist.

3. Einrichtung nach Anspruch 2, dadurch **gekennzeichnet**, daß die Abstandsmeß- bzw. -warnvorrichtung elektrisch an eine benachbarte Mehrfunktionsheckleuchte oder an eine vorhandene separate Rückfahrleuchte angeschlossen ist.

4. Einrichtung nach Anspruch 1, dadurch **gekennzeichnet**, daß die zum Anbau im Heckbereich eines Fahrzeuges bestimmte Einrichtung eine separate Rückfahrleuchte ist.

5. Einrichtung nach Anspruch 1, dadurch **gekennzeichnet**, daß die zum Anbau im Heckbereich eines Fahrzeuges bestimmte Einrichtung eine Heckleuchte ist.
